# EUROPÄISCHE PATENTANMELDUNG

(11) **EP 4 491 380 A1**
(43) Veröffentlichungstag der Anmeldung: **15.01.2025**
(21) Anmeldenummer: 23185350.8
(22) Anmeldetag: 13.07.2023
(51) Int. Cl.: B29C 65/36, B29C 65/00

(54) **VERFAHREN ZUR HERSTELLUNG EINES FASER-KUNSTSTOFF-VERBUND-(FKV)-BAUTEILS, INDUKTIONSSCHWEISSVERFAHREN UND FKV-VERBUNDTEIL**

(71) Anmelder: FACC AG, 4910 Ried im Innkreis (AT)
(72) Erfinder: BECKER, Stephan, 94060 Pocking (AT); GÜROCAK, Maximilian, 1050 Wien (AT); ADAM, Rene Christian, 5023 Salzburg (AT); LAUBER, Wolfgang, 4911 Tumeltsham (AT)
(74) Vertreter: SONN Patentanwälte GmbH & Co KG

(57) **Zusammenfassung**

Verfahren zur Herstellung eines Faser-Kunststoff-Verbund-(FKV)-Bauteils (6), Induktionsschweißverfahren und FKV-Verbundteil, wobei ein spezifischer elektrischer Widerstand eines ersten FKV-Bauteil-Abschnitts (33) in-plane derart angepasst wird bzw. ist, dass beim Verschweißen in dem ersten FKV-Bauteil-Abschnitt (33) eine vorgegebene Temperaturverteilung (5) erzeugt werden kann.

## Beschreibung

Die Erfindung betrifft ein Verfahren zur Herstellung eines Faser-Kunststoff-Verbund-(FKV)-Bauteils mit zumindest den folgenden Schritten:
- Erzeugen eines FKV-Vorformlings aufweisend eine Matrix mit einem Kunststoff, vorzugsweise einen Thermoplasten, und darin enthaltenen elektrisch leitfähigen Fasern, insbesondere elektrisch leitfähigen Kohlenstofffasern; und
- Konsolidieren des FKV-Vorformlings, um ein FKV-Bauteil zu erhalten.

Des Weiteren betrifft die Erfindung ein Induktionsschweißverfahren zum Fügen von Faser-Kunststoff-Verbund-(FKV)-Bauteilen, insbesondere FKV-Bauteilen für ein Flugzeug, mit den folgenden Schritten:
- Anordnen eines ersten FKV-Bauteils und eines zweiten FKV-Bauteils, wobei das erste FKV-Bauteil in einem ersten FKV-Bauteil-Abschnitt mit dem zweiten FKV-Bauteil in einem zweiten FKV-Bauteil-Abschnitt überlappt und dadurch ein Überlappungsbereich definiert wird;
- Induktives Erwärmen des ersten FKV-Bauteils und/oder des zweiten FKV-Bauteils in dem Überlappungsbereich mithilfe eines elektromagnetischen Feldes, insbesondere mithilfe des elektro-magnetischen Feldes eines Induktors; und
- Verschweißen des ersten FKV-Bauteils mit dem zweiten FKV-Bauteil im Überlappungsbereich.

Die Erfindung betrifft weiters ein FKV-Verbundteil, insbesondere Verbundteil für ein Flugzeug, aufweisend zumindest ein erstes Faser-Kunststoff-Verbund-(FKV)-Bauteilteil, und ein zweites Bauteil, insbesondere ein zweites FKV-Bauteil, wobei das erste FKV-Bauteil und das zweite Bauteil in einem Überlappungsbereich miteinander überlappend verbunden sind, wobei der Überlappungsbereich einen ersten FKV-Bauteil-Abschnitt des ersten FKV-Bauteils aufweist.

Faser-Kunststoff-Verbund-Bauteile (kurz FKV-Bauteile) werden im Leichtbau zur Herstellung größerer Strukturen verwendet. FKV-Bauteile können beispielsweise in Form von Laminaten vorliegen bzw. aus solchen bestehen. Aufgrund ihrer hervorragenden physikalischen und mechanischen Eigenschaften in Relation zu ihrer geringen Dichte kommen FKV-Bauteile beispielsweise in der Luft- und Raumfahrt häufig zum Einsatz. Die mechanischen Eigenschaften der FKV-Bauteile werden durch die Kombination aus Verstärkungsfasern und einer Matrix aus Kunststoff, die die Verstärkungsfasern umgibt, gewährleistet. Um komplexe Strukturen aus FKV-Bauteilen fertigen zu können, können einzelne thermoplastische FKV-Bauteile, die häufig in Form von Platten vorliegen, beispielsweise erwärmt und im erwärmten Zustand umgeformt werden. Weiters ist es möglich, einzelne FKV-Bauteile miteinander zu verschweißen, um FKV-Verbundteile zu erhalten. Dazu kann beispielsweise ein Induktionsschweißverfahren angewandt werden.

Mit Induktionsschweißverfahren können im Allgemeinen elektrisch leitfähige und/oder magnetische Bauteile (wie auch FKV-Bauteile) stoffschlüssig miteinander verbunden werden. Bei Induktionsschweißverfahren von elektrisch leitfähigen FKV-Bauteilen werden mit Hilfe von magnetischen Wechselfeldern, die von Induktoren erzeugt werden, Wirbelströme in den zu verschweißenden FKV-Bauteilen induziert. Diese Wirbelströme werden infolge elektrischer Verluste dissipiert, sodass die FKV-Bauteile bis zu einer Schweißtemperatur erwärmt werden können. Bei magnetischen FKV-Bauteilen kommt es bis zum Erreichen der Curie-Temperatur aufgrund des magnetischen Wechselfelds zu magnetischen Hystereseverlusten in den Fügeteilen. Diese Hytereseverluste führen ebenfalls zu einer intrinsischen Erwärmung der Fügeteile. Da die Erwärmung kontaktlos und intrinsisch erfolgt, kann während der gesamten Erwärmung der für das Verschweißen notwendige Fügedruck aufgebracht werden. Durch das Erwärmen, das Aufbringen eines Fügedrucks und das anschließende Abkühlen, entsteht eine dauerhafte Verbindung zwischen den Fügeteilen. Auch um ein einzelnes FKV-Bauteil umzuformen, kann die dafür notwendige Wärmeenergie induktiv eingebracht werden.

Im Unterschied zu den meisten kraftschlüssigen und formschlüssigen Verbindungsmethoden, wie zum Beispiel Verbindungen von Fügeteilen mittels Schrauben, Nieten oder Bolzen, bleiben bei Induktionsschweißverfahren vorteilhafterweise die Integrität des Materials und die Beanspruchbarkeit der Fügeteile besser erhalten und werden nicht durch Bohrungen oder dergleichen negativ beeinflusst. Durch die meist punktuelle Krafteinleitung bei mechanischen Fügeverfahren ergeben sich an den Verbindungsstellen ausgeprägte Spannungskonzentrationen, die insbesondere bei dünnwandigen Fügeteilen später bei Belastungen zu Problemen führen können. Damit die Spannungskonzentrationen nicht zum Versagen des FKV-Bauteils führen, muss daher typischerweise die Wanddicke des FKV-Bauteils im Fügebereich erhöht werden, wodurch eine Gewichtszunahme resultiert. Deshalb werden Induktionsschweißverfahren häufig in Bereichen eingesetzt, in denen eine hohe Beanspruchbarkeit der verbundenen Fügeteile in Verbindung mit einem hohen Leichtbaugrad besonders wichtig ist, wie im Luft- und Raumfahrtbereich.

Typischerweise werden die elektromagnetischen Wechselfelder, die zum Erwärmen der FKV-Bauteile verwendet werden, von Induktoren erzeugt, die über die Oberfläche der FKV-Bauteile geführt werden. Ein Problem ist hierbei, dass aufgrund der Geometrie des Induktors und der Geometrie der FKV-Bauteile eine inhomogene Temperaturverteilung bzw. eine Temperaturverteilung, die von einer Solltemperaturverteilung abweicht, entsteht.

Eine mögliche Ursache für unerwünschte Temperaturverteilungen ist der sogenannte Randeffekt, der beim induktiven Erwärmen im Randbereich eines FKV-Bauteils zu Temperaturabweichungen führt. Bei der induktiven Erwärmung in einem zentralen Bereich von großflächigen Laminaten, stellt sich im FKV-Bauteil typischerweise eine Temperaturverteilung ein, deren Form im Wesentlichen dem Spiegelbild des Induktors entspricht. Ragt hingegen der Induktor über Rand des FKV-Bauteils hinaus, zeigt sich der Randeffekt in Form eines ausgeprägten Temperaturmaximums am Rand des FKV-Bauteils, da die Wirbelströme im FKV-Bauteil der Form des Induktors über den Rand des FKV-Bauteils hinaus nicht folgen können. Folglich kommt es einer hohen Wirbelstromdichte am Rand des FKV-Bauteils, sodass am Rand des FKV-Bauteils mehr Energie dissipiert wird und dadurch ein ausgeprägtes Temperaturmaximum auftritt.

Der effektive Gesamtwiderstand der Leiterschleife, die für die Induktion im FKV-Bauteil relevant ist, ist beim Auftreten des Randeffekts erhöht, wodurch trotz des Temperaturmaximums am Rand die induzierte Gesamtleistung reduziert wird. Insgesamt wird im Randbereich des FKV-Bauteils daher weniger Energie dissipiert als in einem mittigen Bereich des FKV-Bauteils. Das resultierende Temperaturmaximum am äußeren Rand in Kombination mit dem großen Temperaturgradienten zu weiter innen gelegenen Bereichen kann zu Delaminationen im FKV-Bauteil oder zur thermischen Degradation der polymeren Matrix in diesem Bereich führen. Die Integrität eines durch einen solchen Induktionsschweißvorgang erhaltenen FKV-Verbundteils kann durch diesen Effekt stark beeinträchtigt werden. Der Randeffekt tritt beispielsweise bei nahezu allen Überlappschweißungen von kohlenstofffaserverstärkten Thermoplasten auf, bei denen ein offener Rand des FKV-Bauteils vorliegt. Der Randeffekt tritt auch beim Erwärmen nur eines FKV-Bauteils auf, das zum Zweck einer Umformung induktiv erwärmt werden soll. Auch in diesem Fall kann ein unerwünschtes Temperaturmaximum am Rand und ein entsprechender Temperaturgradient zu Schäden am FKV-Bauteil führen.

Beispielsweise ist aus der WO 2018 097 716 A1 als eine Maßnahme zur Verringerung des Randeffekts bekannt, ein separates elektrisch leitfähiges Element (ein sogenannter Bypass) am Rand eines Laminats anzuordnen, das zudem mit dem Laminatrand elektrisch kontaktiert ist. Die Feldlinien des Induktors können sich folglich sowohl im Laminat als auch im Bypass ausbreiten, wodurch insgesamt ein lokales Temperaturmaximum am Rand des Laminats vermieden werden kann.

Aus der US 5 500 511 A sind separate elektrisch leitfähige Suszeptoren für das Induktionsschweißen von Thermoplasten bekannt, um eine gleichmäßigere Erwärmung beim Schweißen von Verbundwerkstoffteilen durch Induktionserwärmung zu erreichen. Ein Suszeptor kann zwischen zwei zu verschweißenden Thermoplasten angeordnet werden.

Nachteilig an den bekannten Verfahren ist, dass jeweils ein separates elektrisch leitfähiges Bauteil verwendet werden muss. Die Handhabung eines separaten Bauteils erhöht den Aufwand und stellt darüber hinaus eine Quelle für weitere prozesstechnische Unsicherheiten dar. Nachteilig ist auch, dass der eingesetzte Bypass oder Suszeptor spezifisch an das FKV-Bauteil angepasst sein muss.

Der Randeffekt kann gemäß DE 10 2021 102 485 A1 durch eine spezielle Positionierung der Induktionsspule zum Rand des Laminats vermieden werden. Hierbei wird der Randeffekt gezielt vergrö-ßert, sodass der resultierende elektrische Widerstand, den der Strom am Rand überwinden muss, so groß ist, dass es in einem oberen Laminat zu keinem Stromfluss kommt und nur ein unteres Laminat erwärmt wird. Allerdings muss für jede Überlappungsbreite eine eigene Induktorgeometrie verwendet werden. Ebenfalls wird Energie in Bereichen des Laminats eingebracht, deren Erwärmung für das Verschweißen nicht erforderlich ist. Dies ist zum einen energetisch ineffizient, und zum anderen erhöht es den prozesstechnischen Aufwand durch die Berücksichtigung zusätzlicher Oberflächenkühlung, um mögliche Dekonsolidation im Laminat zu vermeiden.

Worrall, C. M., R. J. Wise, and A. Kapadia. "Novel induction heating technique for joining of carbon fibre composites." 16th European conference on composite materials. 2014, zeigt ein Laminat mit elektrisch leitfähigen Kohlenstofffasern. Diese Fasern sind in einer thermoplastischen Matrix eingebettet. Das Laminat weist elektrisch isolierende Schichten auf, sodass im Zuge eines Induktionsschweißverfahrens in Dickenrichtung des Laminats (out-of-plane) die eingebrachte Energie beeinflusst werden kann. Der Randeffekt kann durch die elektrisch isolierenden Schichten nicht verhindert werden.

Es ist daher Aufgabe der vorliegenden Erfindung, die Nachteile des Stands der Technik zu beseitigen oder zumindest zu lindern. Vorzugsweise ist es Aufgabe der vorliegenden Erfindung, ein Verfahren zur Herstellung eines Faser-Kunststoff-Verbund-(FKV)-Bauteils, ein Induktionsschweißverfahren und ein FKV-Verbundteil zur Verfügung zu stellen, mit denen vorab definierte in-plane Temperaturverteilungen in FKV-Bauteil erzeugt werden können. Vorzugsweise soll mit Hilfe der Erfindung der Randeffekt bei der induktiven Erwärmung von FKV-Bauteilen verhindert oder zumindest verkleinert werden und somit die Integrität von FKV-Verbundteilen verbessert werden.

Gelöst wird diese Aufgabe durch ein Verfahren zur Herstellung eines Faser-Kunststoff-Verbund-(FKV)-Bauteils nach Anspruch 1, ein Induktionsschweißverfahren nach Anspruch 9 und ein FKV-Verbundteil nach Anspruch 12.

Erfindungsgemäß ist bei einem Verfahren zur Herstellung eines FKV-Bauteils der eingangs erwähnten Art vorgesehen, dass der FKV-Vorformling einen FKV-Vorformling-Bereich, insbesondere ein FKV-Vorformling-Randbereich, aufweist, dessen spezifischer elektrischer Widerstand während oder nach dem Erzeugen des FKV-Vorformlings in-plane derart angepasst wird, dass bei einem Erwärmen des FKV-Bauteils mithilfe induktiver Energiezufuhr, beispielsweise mittels eines Induktionsschweißverfahrens, in einem FKV-Bauteil-Abschnitt, der dem FKV-Vorformling-Bereich entspricht, eine vorgegebene Temperaturverteilung erzeugbar ist.

Vorteilhafterweise können durch die Anpassung des spezifischen Widerstands Bereiche in einem FKV-Bauteil geschaffen werden, die sich bei der induktiven Energiezufuhr unterschiedlich erwärmen. Auf diese Weise ist es möglich, eine gewünschte Temperaturverteilung des FKV-Bauteils in-plane zu erzeugen. Ein weiterer Vorteil ist, dass dadurch das Temperaturmaximum beim Auftreten des Randeffekts kompensiert werden kann. Das Anpassen des spezifischen elektrischen Widerstands des FKV-Vorformling-Bereichs erfolgt an dem FKV-Vorformling, nicht an dem FKV-Bauteil. Mit anderem Worten findet das Anpassen des spezifischen elektrischen Widerstands des FKV-Vorformling-Bereichs spätestens während des Konsolidierens zum FKV-Bauteil statt.

Ein Faser-Kunststoff-Verbund-(FKV)-Bauteil (kurz FKV-Bauteil) weist elektrisch leitfähige Fasern, beispielsweise elektrisch leitfähigen Kohlestofffasern, auf, die in einer Matrix aufweisend einen Kunststoff, vorzugsweise einen Thermoplasten, angeordnet sind. In einem ersten Schritt zur Herstellung eines FKV-Bauteils wird ein FKV-Vorformling aufweisend eine Matrix mit einem Kunststoff, vorzugsweise einen Thermoplasten, und darin enthaltenen elektrisch leitfähigen Fasern, insbesondere elektrisch leitfähigen Kohlenstofffasern, erzeugt.

Das Erzeugen des FKV-Vorformlings kann bei einer beispielhaften Ausführungsform der Erfindung die folgenden beiden Schritte umfassen:
- Vorsehen von elektrisch leitfähigen Fasern, insbesondere elektrisch leitfähigen Kohlenstofffasern;
- Einbetten der elektrisch leitfähigen Fasern in eine Matrix aufweisend einen Kunststoff, vorzugsweise einen Thermoplasten, um einen FKV-Vorformling zu erhalten.

Der FKV-Vorformling kann aber auch durch Verbinden von UD-Schichten mit darin enthaltenen elektrisch leitfähigen Fasern erzeugt werden.

Die elektrisch leitfähigen Fasern können beispielsweise eine mittlere Länge von in etwa 1 mm bis zu einer maximalen Länge, die im Wesentlichen einer Länge oder einer Breite des FKV-Bauteils entspricht, und einen Durchmesser zwischen 5 µm und 0,5 mm aufweisen. Beispielsweise können die Fasern in Form eines oder mehrerer Faserhalbzeuge vorgesehen werden. Beispielsweise können Faserhalbzeuge in Form von Rovings, Geweben, Gelegen, Geflechten, Matten oder Vliesstoffen angeordnet sein. Rovings sind Bündel aus im Wesentlichen parallel angeordneten elektrisch leitfähigen Fasern. Die elektrisch leitfähigen Fasern können beispielsweise Kohlenstofffasern oder metallische Fasern sein. Die Fasern bzw. die Faserhalbzeuge können beispielsweise, wie bereits in Zusammenhang mit einer beispielhaften Ausführungsform der Erfindung erwähnt, in die Matrix eingebettet werden, um einen FKV-Vorformling zu erhalten. Die Matrix kann beispielsweise einen Kunststoff wie Polyamid (PA), Polypropylen (PP), Polyethylen (PE), Polyphenylensulfid (PPS), Polyetherimid (PEI), Polyethersulfon (PES) sowie Thermoplaste aus der Gruppe der Polyaryletherketone (PAEK), wie z.B. LM-PAEK, Polyetheretherketon (PEEK) oder Polyetherketonketon (PEKK) aufweisen. Der Kunststoff kann während des Erzeugens des FKV-Vorformlings (beispielsweise während des Einbettens der Fasern in die Matrix) in flüssiger Form vorliegen. Die Fasern bzw. die Faserhalbzeuge können bei einer Ausführungsform mit Kunststoff imprägniert werden, um in die Matrix eingebettet zu werden. Als FKV-Vorformling wird zum Zwecke dieser Offenbarung ein Zwischenprodukt des Herstellungsprozesses bezeichnet, das Fasern in einer Matrix aufweist. Die Matrix des Vorformlings kann beispielsweise viskos oder, wie insbesondere im Fall eines thermoplastischen Kunststoffs, fest sein. Die Matrix eines FKV-Bauteils ist schließlich fest, was insbesondere durch Konsolidierung bzw. Aushärtung erfolgen kann. Um aus dem FKV-Vorformling ein entsprechendes FKV-Bauteil zu erhalten, wird dieser konsolidiert. Optional kann der FKV-Vorformling zusätzlich zum Konsolidieren, insbesondere während des Konsolidierens, auch umgeformt werden, um das FKV-Bauteil zu erhalten. Dabei kann der FKV-Vorformling in eine finale Geometrie geformt werden. Konsolidieren kann beispielsweise ein Aufbringen eines Konsolidierungsdrucks auf den FKV-Vorformling während des Abkühlens des Kunststoffs der Matrix aus einer Schmelze in einen festen Zustand beinhalten. Ein FKV-Bauteil kann beispielsweise die Form einer Platte aufweisen. Das FKV-Bauteil kann beispielsweise eine Länge zwischen 0,2 m und 200 m, eine Breite zwischen 0,02 m und 20 m und eine Wanddicke zwischen 0,1 mm und 20 mm aufweisen. Das FKV-Bauteil hat vorzugsweise eine Dicke, die geringer ist als die Länge und die Breite des FKV-Bauteils. Im FKV-Vorformling wie auch daraus erhaltenen FKV-Bauteil liegen die Fasern typischerweise geordnet vor. In-plane bedeutet in dieser Offenbarung eine Richtung, die parallel zu in-plane-Ebenen liegt. In-plane-Ebenen sind parallele Ebenen in einem FKV-Bauteil, zu denen lokal betrachtet statistisch gesehen die Mehrheit der Haupterstreckungsachsen der Fasern des FKV-Bauteils, vorzugsweise mehr als 70 % der Haupterstreckungsachsen der Fasern, parallel ausgerichtet sind. Die Haupterstreckungsachsen der Fasern eines FKV-Bauteils liegen also per Definition lokal betrachtet mehrheitlich in-plane orientiert vor. Out-of-plane bedeutet in dieser Offenbarung eine Richtung, die im Wesentlichen normal auf die in-plane-Ebenen liegt. Weist das FKV-Bauteil beispielsweise eine Plattenform auf, sind die Fasern mehrheitlich so orientiert, dass eine Hauptachse der einzelnen Fasern parallel zu einer Haupterstreckungsebene bzw. einer in-plane-Ebene des plattenförmigen FKV-Bauteils liegt. Die Orientierung der Fasern im FKV-Bauteil kann durch die Orientierung der Fasern im Faserhalbzeug und der Orientierung des Faserhalbzeugs im FKV-Bauteil vorgegeben sein. Selbst wenn nicht alle Fasern geordnet vorliegen, liegt eine überwiegend und statistisch gehäufte Orientierung der Fasern im FKV-Bauteil in parallelen Ebenen vor. "Out-of-plane" bezeichnet eine Richtung normal auf diese Orientierung der Fasern. Beispielsweise verläuft ein Normalvektor auf eine Haupterstreckungsebene eines plattenförmigen FKV-Bauteils out-of-plane. Die Dicke des FKV-Bauteils bezeichnet eine Dimension des FKV-Bauteils in out-of-plane-Richtung.

Als spezifischen elektrischen Widerstand wird zum Zwecke dieser Offenbarung ein mittlerer spezifischer elektrischer Widerstand in einem Volumenelement bezeichnet. Aufgrund der Fasern, die sich in einer Matrix mit einem Kunststoff befinden, ist der FKV-Vorformling sowie das FKV-Bauteil inhomogen in Bezug auf mehrere physikalische Eigenschaften bei ausreichend feiner Diskretisierung. Da ein spezifischer elektrischer Widerstand der Fasern im Allgemeinen kleiner ist als ein spezifischer elektrischer Widerstand des Kunststoffs, ist auch der spezifische elektrische Widerstand des FKV-Bauteils bei ausreichend feiner Diskretisierung, also ohne Mittelung über ein Volumenelement, inhomogen. Ein Volumenelement kann beispielsweise die Form eines Würfels aufweisen und sich über die gesamte Dicke des FKV-Bauteils erstrecken. Eine Seitenlänge des Würfels kann bei einer Ausführungsform zwischen 0,1 mm und 10 mm liegen. Der spezifische elektrische Widerstand bezeichnet somit eine Mittelung über ein Volumenelement des FKV-Bauteils, das sowohl Fasern als auch Kunststoff aufweist. Aufgrund der Orientierung der Fasern ist der spezifische elektrische Widerstand im Fall von FKV-Bauteilen ein Tensor, da der spezifische elektrische Widerstand in diesem Fall richtungsabhängig ist. Bei einem multidirektional verstärkten Laminat ist der spezifische elektrische Widerstand in-plane typischerweise deutlich geringer als der spezifische elektrische Widerstand out-of-plane, da die Fasern in Faserrichtung, d.h. in-plane, leitfähig sind, während nicht alle Fasern entgegen der Faserrichtung, d.h. out-of-plane, miteinander elektrisch verbunden sind. Ein Sonderfall sind FKV-Bauteile die ausschließlich Fasern in 0°-Lagen aufweisen (unidirektional verstärkte Laminate). In diesem Fall sind alle elektrisch leitfähigen Fasern im Wesentlichen parallel zueinander ausgerichtet. Die elektrisch leitfähigen Fasern sind demnach auch in-plane nicht oder nur an wenigen Punkten elektrisch miteinander verbunden. Demnach kann der spezifische elektrische Widerstand in Fasserrichtung deutlich niedriger sein, als in Richtungen normal auf die Faserrichtung. Es gibt somit auch in-plane Richtungen (quer, insbesondere normal, auf die Faserrichtung), die einen vergleichbar geringen spezifischen elektrischen Widerstand aufweisen wie in out-of-plane Richtung.

Der FKV-Vorformling weist einen FKV-Vorformling-Bereich, insbesondere ein FKV-Vorformling-Randbereich, auf, dessen spezifischer elektrischer Widerstand während oder nach dem Erzeugen des FKV-Vorformlings in-plane angepasst wird. Der FKV-Vorformling weist einen Rand auf, der den FKV-Vorformling, insbesondere den FKV-Vorformling-Randbereich, in-plane begrenzt. Der FKV-Vorformling-Randbereich erstreckt sich vom Rand in-plane in Richtung der Mitte des FKV-Vorformlings. Bei einer Ausführungsform der Erfindung kann sich der FKV-Vorformling-Randbereich zumindest 0,1 mm vom Rand weg in plane erstrecken. Der FKV-Vorformling-Randbereich kann beispielsweise in-plane betrachtet rechteckig sein. Beispielsweise kann eine Seite, insbesondere eine Längsseite, des rechteckigen FKV-Vorformling-Randbereichs durch einen Teil des Rands des FKV-Vorformlings gebildet sein. Bei einem Ausführungsbeispiel der Erfindung ist der FKV-Vorformling in-plane betrachtet rechteckig. Dabei kann der FKV-Vorformling-Randbereich in-plane entlang eines gesamten Längsrandes des rechteckigen FKV-Vorformlings verlaufen. Der FKV-Vorformling-Randbereich kann dabei eine Länge aufweisen, die einer Länge des FKV-Vorformlings entspricht.

Der spezifische elektrische Widerstand des FKV-Vorformlings kann in-plane variieren, sodass eine gewünschte Temperaturverteilung erzeugt werden kann. Bei einer bevorzugten Ausführungsform der Erfindung kann der FKV-Vorformling plattenförmig sein und eine Haupterstreckungsebene des FKV-Vorformlings in kartesischen Koordinaten in einer x-y-Ebene liegen, die von den Richtungen x und y aufgespannt wird. Die elektrisch leitfähigen Fasern können überwiegend parallel zu x-y-Ebene ausgerichtet sein. In-plane ist somit parallel zu der x-y-Ebene. Out-of-plane liegt somit hierzu normal in z-Richtung. Folglich erstreckt sich eine Dicke des FKV-Vorformlings in z-Richtung. Dass der spezifische elektrische Widerstand des FKV-Vorformlings in-plane variieren kann, ist derart aufzufassen, dass der spezifische elektrische Widerstand des FKV-Vorformlings eine Funktion der Koordinaten x und y ist. Eine durch induktive Energiezufuhr resultierende Temperaturverteilung des aus dem FKV-Vorformling erhaltenen FKV-Bauteils bezieht sich ebenso auf die Variation der Temperatur in-plane. Die Temperaturverteilung gibt in diesem Beispiel somit die Temperatur des FKV-Bauteils als eine Funktion der Koordinaten x und y an. Beispielsweise kann der spezifische elektrische Widerstand im FKV-Vorformling-Abschnitt einen konstanten Wert r1 und im übrigen FKV-Vorformling einen Wert r2 aufweisen, wobei r1 von r2 verschieden ist.

Die Anpassung des spezifischen elektrischen Widerstands ist derart, dass bei einem Erwärmen des FKV-Bauteils mithilfe induktiver Energiezufuhr, beispielsweise mittels eines Induktionsschweißverfahrens, in einem FKV-Bauteil-Abschnitt, der dem FKV-Vorformling-Bereich entspricht, eine vorgegebene Temperaturverteilung erzeugbar ist. Insbesondere kann der FKV-Vorformling-Bereich einen niedrigeren spezifischen elektrischen Widerstand aufweisen als der übrige FKV-Vorformling, um bei konstanten Parametern der induktiven Energiezufuhr, wie etwa Frequenz und Amplitude des magnetischen Wechselfeldes, im entsprechenden FKV-Bauteil-Abschnitt eine gleiche oder niedrige Temperatur zu bewirken als im restlichen FKV-Bauteil oder im restlichen FKV-Bauteil.

Die induktive Energiezufuhr wird typischerweise mittels eines Induktors erreicht. Der Induktor kann als Spule mit zumindest einer Windung, vorzugsweise mehreren Windungen, ausgebildet sein. Die Form des Induktors ist jedoch für die Erfindung nicht ausschlaggebend. Alternativ kann als Induktor daher auch zum Beispiel ein Linieninduktor, insbesondere ein Draht mit einem vorzugsweise geraden Drahtabschnitt, sein. Der Induktor kann vom FKV-Bauteil beabstandet in-plane über das FKV-Bauteil geführt werden. Der Induktor kann mit Wechselspannung betrieben werden. Der Induktor kann dadurch mit konstanten Induktor-Betriebsparametern betrieben werden. Induktor-Betriebsparameter können unter anderem die Frequenz für das Wechselfeld, die Expositionsdauer des Induktors über einem Bereich des FKV-Bauteils, eine Feldstärke des Wechselfeldes und/oder ein Kopplungsabstand sein. Der Kopplungsabstand bezeichnet den Normalabstand des Induktors zu dem FKV-Bauteil. Beispielsweise kann der FKV-Vorformling-Randbereich eine Breite aufweisen, die im Wesentlichen einer charakteristischen Ausdehnung oder einem Vielfachen der charakteristischen Ausdehnung eines Induktors zum induktiven Erwärmen des aus dem FKV-Vorformling erhaltenen FKV-Bauteils entspricht. Eine charakteristische Ausdehnung ist beispielsweise ein Durchmesser einer Spule, die den Induktor bilden kann.

Beispielsweise kann zur Verminderung oder Vermeidung des Randeffekts der spezifische elektrische Widerstand im FKV-Vorformling-Randbereich in-plane verringert werden. Durch den verringerten spezifischen Widerstand am Rand kann trotz höherer Stromdichten im Randbereich eine erhöhte Dissipation von Energie und folglich ein ausgeprägtes und unerwünschtes Temperaturmaximum am Rand des FKV-Bauteils vermieden werden. Mit anderen Worten kann erhöhte Energiedissipation durch die erhöhte Stromdichte im Randbereich durch eine Verringerung des spezifischen elektrischen Widerstandes kompensiert werden.

Durch das erfindungsgemäße Verfahren kann der spezifische elektrische Widerstand des FKV-Bauteils in einem FKV-Bauteil-Abschnitt während oder nach dem Erzeugen des FKV-Vorformlings in-plane derart angepasst werden, dass durch induktives Erwärmen des FKV-Bauteils auf einfache Weise eine vorgegebene Temperaturverteilung in-plane erzeugbar ist. Dazu ist vorteilhafterweise kein separates Element wie ein Bypass oder ein Suszeptor notwendig. Auch eine Anpassung von Induktor-Betriebsparametern in Abgängigkeit von der relativen Position des Induktors zum FKV-Bauteil ist durch das erfindungsgemäße Verfahren nicht notwendig.

Die elektrisch leitfähigen Fasern können beispielsweise in unidirektionalen Bandhalbzeugen, insbesondere in UD-Schichten (UD = unidirektional), angeordnet sein. Es können beispielsweise zumindest zwei, vorzugsweise zumindest vier, insbesondere zumindest acht unidirektionalen Bandhalbzeuge vorgesehen sein. Unidirektionale Halbzeuge bieten eine besonders einfache und zuverlässige Möglichkeit, Fasern vorzusehen.

Vorzugsweise sind die elektrisch leitfähigen Fasern als Rovings, Gelege, Vließmatten oder Gewebe, angeordnet. Es können beispielsweise zumindest zwei, vorzugsweise zumindest vier, insbesondere zumindest acht Gelege oder Vliesmatten vorgesehen sein. Rovings, Gelege, Vliesmatten und Gewebe sind besonders weit verbreitete textile Faserhalbzeuge.

Bei einer bevorzugten Ausführungsform der Erfindung kann der folgende weitere Schritt vor dem Konsolidieren des FKV-Vorformlings vorgesehen sein:
- Vorsehen von weiteren elektrisch leitfähigen Fasern, insbesondere metallischen Fasern, welche vorzugsweise eine höhere elektrische Leitfähigkeit besitzen als die elektrisch leitfähigen Fasern; wobei die weiteren elektrisch leitfähigen Fasern während des Erzeugens des FKV-Vorformlings im FKV-Vorformling-Bereich des FKV-Vorformlings in die Matrix eingebettet werden, sodass der FKV-Bauteil-Abschnitt des nach dem Konsolidieren erhaltenen FKV-Bauteils die weiteren elektrisch leitfähigen Fasern aufweist. Durch das Vorsehen und Einbringen von weiteren elektrisch leitfähigen Fasern, die vorzugsweise eine höhere elektrischen Leitfähigkeit als die elektrisch leitfähigen Fasern aufweisen, kann lokal der spezifische elektrische Widerstand des FKV-Vorformlings im FKV-Vorformling-Bereich verringert werden. Nach dem Konsolidieren des FKV-Vorformlings weist folglich das erhaltene FKV-Bauteil im entsprechenden FKV-Bauteil-Abschnitt einen verringerten spezifischen elektrischen Widerstand im Vergleich zum Übrigen FKV-Bauteil auf. Das gezielte Vorsehen von weiteren elektrisch leitfähigen Fasern stellt eine besonders einfache, kontrollierte und reproduzierbare Möglichkeit dar, den spezifischen Widerstand des FKV-Vorformlings im FKV-Vorformling-Bereich anzupassen. Die weiteren elektrisch leitfähigen Fasern können beispielsweise lose, in Form von Rovings oder in Form einer Gitterstruktur vorliegen. Rovings sind Bündel aus im Wesentlichen parallel angeordneten elektrisch leitfähigen Fasern. Alternativ oder zusätzlich zu den weiteren elektrisch leitfähigen Fasern kann elektrisch leitfähiges Material in Form eines Pulvers vorgesehen werden.

Beispielsweise können die weiteren elektrisch leitfähigen Fasern die unidirektionalen Bandhalbzeuge im FKV-Vorformling-Bereich elektrisch verbinden. Durch die elektrische Verbindung einzelner unidirektionaler Bandhalbzeuge kann eine effektive Länge der für die induktive Erwärmung relevanten Leiterschleifen erhöht werden. Dadurch sinkt insgesamt der spezifische elektrische Widerstand im FKV-Vorformling-Bereich.

Bei einer Ausführungsform der Erfindung kann der folgende weitere Schritt vorgesehen sein:
- Pressen des FKV-Vorformlings mit einem Konsolidierungsdruck, insbesondere während des Konsolidierens wobei im FKV-Vorformling-Randbereich ein Konsolidierungsdruck anliegt, der höher ist als der Konsolidierungsdruck im übrigen Bereich des FKV-Vorformlings, wobei beim Pressen des FKV-Vorformlings Kunststoff aus dem FKV-Vorformling-Randbereich verdrängt wird. Der FKV-Vorformling kann während des Konsolidierens gepresst werden, um den FKV-Vorformling in eine bestimmte Form zu bringen (d.h. um den FKV-Vorformling umzuformen) und/oder, um Kunststoff aus dem FKV-Vorformling zu pressen. Mit anderen Worten kann durch das Pressen auch ein Umformen erfolgen. Der spezifische elektrische Widerstand in einem Volumenelement eines FKV-Bauteils hängt unter anderem vom Faservolumengehalt (FVG) ab. Der FVG gibt ein Verhältnis des Volumens der Fasern zum Volumen an Kunststoff in einem Volumenelement des FKV-Bauteils an. Je höher der FKV ist, desto niedriger ist der spezifische elektrische Widerstand des Volumenelements. Der niedrigere spezifische elektrische Widerstand resultiert aus einer besseren elektrischen Kontaktierung aufgrund einer Steigerung der Anzahl und Größe von Kontaktstellen der Fasern. Der Konsolidierungsdruck liegt so an, dass der FKV-Vorformling out-of-plane, d.h.in Dickenrichtung, zusammengepresst wird. Liegt über den gesamten FKV-Vorformling ein konstanter Konsolidierungsdruck an, ist in-plane ein im Wesentlichen konstanter FVG zu erwarten. Wird im FKV-Vorformling-Randbereich ein Konsolidierungsdruck angelegt, der höher ist als der Konsolidierungsdruck im übrigen Bereich des FKV-Vorformlings, wird aus dem FKV-Vorformling-Randbereich mehr Kunststoff verdrängt als in dem übrigen Bereich. Beim Pressen des FKV-Vorformlings kann Kunststoff aus dem FKV-Vorformling-Randbereich und dem FKV-Vorformling austreten. Folglich ist der FVG im FKV-Vorformling-Randbereich erhöht, wodurch der spezifische elektrische Widerstand im entsprechenden FKV-Bauteil-Randabschnitt niedriger ist als im übrigen FKV-Bauteil. Es ist zu beachten, dass der finale Konsolidierungsdruck am Ende des Pressvorgangs über den gesamten FKV-Vorformling konstant sein kann, da sich ein Gleichgewicht einstellt, sobald hinreichend Kunststoff verdrängt wurde und beispielsweise aus dem FKV-Vorformling ausgetreten ist. Demnach liegt der unterschiedliche Konsolidierungsdruck, wie beispielsweise der höhere Konsolidierungsdruck im FKV-Vorformling-Randbereich, initial an. Der Konsolidierungsdruck kann eine zeitliche Abhängigkeit aufweisen. Beispielsweise kann der Konsolidierungsdruck mit dem Fortschreiten der Zeit abnehmen und einen stationären finalen Konsolidierungsdruck erreichen. Der Konsolidierungsdruck kann daher ein initialer und/oder transienter Konsolidierungsdruck sein. Ein ähnlicher Effekt kann auch in einem Film-Stacking-Verfahren erzielt werden, in dem die Menge an Kunststoff im FKV-Vorformling-Bereich von vorneherein reduziert wird.

Günstig ist, wenn der Konsolidierungsdruck im FKV-Vorformling-Bereich ortsabhängig ist und von einem inneren, einer Mitte des FKV-Vorformlings zugewandten Ende eines Außenabschnitts zu einem äußerem, dem inneren Ende gegenüberliegenden Ende des Außenabschnitts hin ansteigt, wobei das äußere Ende des Außenabschnitts ein äußeres Ende des FKV-Vorformlings ist. Demnach kann der Konsolidierungsdruck in Bezug auf die Mitte des FKV-Vorformling von innen nach außen zum Rand des FKV-Vorformlings hin ansteigen. Dadurch steigt auch der FVG im FKV-Vorformling-Randbereich von innen nach außen zum Rand hin an. Folglich sinkt der spezifische elektrische Widerstand von innen nach außen, wobei der spezifische elektrische Widerstand am Rand des FKV-Vorformlings ein Minimum aufweist. Somit fällt bei einer induktiven Erwärmung des aus dem FKV-Vorformlings erhaltenen FKV-Bauteils das Minimum des spezifischen elektrischen Widerstands mit einem Maximum an Stromdichte zusammen. Der Konsolidierungsdruck kann beispielsweise linear von innen nach außen steigen.

Vorzugsweise wird der FKV-Vorformling während des Konsolidierens insbesondere auf mindestens die Schmelztemperatur des Kunststoffs erwärmt, wobei der FKV-Vorformling im FKV-Vorformling-Bereich auf eine Temperatur erwärmt wird, die höher ist als die Temperatur im übrigen Bereich des FKV-Vorformlings. Insbesondere durch einen anliegenden Konsolidierungsdruck wird während des Konsolidierens Kunststoff verdrängt und tritt beispielsweise aus dem FKV-Vorformling aus. Die Menge an austretendem Kunststoff hängt von der Viskosität des Kunststoffs ab. Im Allgemeinen steigt die Viskosität bei sinkender Temperatur und umgekehrt. Daher tritt bei höheren Temperaturen (lokal) mehr Kunststoff aus dem FKV-Vorformling aus, wodurch der FVG folglich ansteigt und der spezifische elektrische Widerstand sinkt. Demnach kann durch die Wahl der Temperatur während des Konsolidierens der spezifische elektrische Widerstand des späteren FKV-Bauteils beeinflusst werden.

Durch eine Kombination aus Konsolidierungsdruck im FKV-Vorformling-Bereich und Temperatur im FKV-Vorformling-Bereich kann der FVG und folglich der spezifische elektrische Widerstand im FKV-Vorformling-Bereich und im entsprechenden FKV-Abschnitt angepasst, insbesondere verringert, werden. Ein höherer Druck und eine höhere Temperatur führen zu einem gesteigerten FVG und zu einem niedrigeren spezifischen elektrischen Widerstand.

Beispielsweise kann der spezifische elektrische Widerstand des FKV-Bauteils im FKV-Bauteil-Abschnitt zumindest um 5 %, zumindest um 7ö, zumindest um 10 %, zumindest um 15 %, zumindest um 20 %, zumindest um 30 % oder zumindest um 40 % kleiner sein als ein mittlerer spezifischer elektrischer Widerstand des FKV-Bauteils.

Die Erfindung betrifft weiters ein Induktionsschweißverfahren zum Fügen von Faser-Kunststoff-Verbund-(FKV)-Bauteilen, insbesondere FKV-Bauteilen für ein Flugzeug. Bei dem erfindungsgemä-ßen Induktionsschweißverfahren ist vorgesehen, dass ein spezifischer elektrischer Widerstand des ersten FKV-Bauteil-Abschnitts und/oder zweiten FKV-Bauteil-Abschnitts in-plane derart angepasst ist, dass beim Verschweißen in dem ersten FKV-Bauteil-Abschnitt und/oder zweiten FKV-Bauteil-Abschnitt eine vorgegebene Temperaturverteilung erzeugt wird.

In einem ersten Schritt des Induktionsschweißverfahrens wird ein erstes FKV-Bauteil und ein zweites FKV-Bauteil derart angeordnet, dass das erste FKV-Bauteil in einem ersten FKV-Bauteil-Abschnitt mit dem zweiten FKV-Bauteil in einem zweiten FKV-Bauteil-Abschnitt überlappt und dadurch ein Überlappungsbereich definiert wird. Das erste FKV-Bauteil weist erste elektrisch leitfähige Fasern und eine erste Matrix mit einem ersten Kunststoff auf. Das zweite FKV-Bauteil weist zweite elektrisch leitfähige Fasern und eine zweite Matrix mit einem zweiten Kunststoff auf. Beispielsweise können die ersten elektrisch leitfähigen Fasern dieselben physikalischen Eigenschaften aufweisen, wie die zweiten elektrisch leitfähigen Fasern. Beispielsweise kann der erste Kunststoff dieselben physikalischen Eigenschaften wie der zweite Kunststoff aufweisen. Insbesondere können die Materialien der ersten und zweiten elektrisch leitfähigen Fasern und/oder die Materialien des ersten und zweiten Kunststoffes gleich sein.

In einem weiteren Schritt wird das erste FKV-Bauteil und/oder das zweite FKV-Bauteil in dem Überlappungsbereich mithilfe eines elektromagnetischen Feldes induktiv erwärmt. Insbesondere kann dazu das elektromagnetische Feld eines Induktors verwendet werden. Der Induktor kann derart angeordnet werden, dass das erzeugte elektromagnetische Feld des Induktors in das erste FKV-Bauteil und/oder zweite FKV-Bauteil eindringen und elektrische Wirbelströme induzieren kann. Mit dem Induktor kann ein elektro-magnetisches Wechselfeld erzeugt werden, dessen Frequenz in Abhängigkeit der Materialien des ersten FKV-Bauteils und/oder zweiten FKV-Bauteils so gewählt wird, dass zumindest in einer elektrischen Leiterschlaufe Wirbelströme induziert werden. Eine elektrische Leiterschlaufe kann durch eine oder mehrere elektrisch leitfähige Fasern (wie die ersten oder die zweiten elektrisch leitfähigen Fasern) gebildet werden. Vorzugsweise wird mit dem Induktor ein Wechselfeld erzeugt, das eine konstante Amplitude der magnetischen Feldstärke und eine konstante Frequenz aufweist. Die Induktor-Betriebsparameter, wie beispielsweise die Amplitude der magnetischen Feldstärke, die Frequenz für das Wechselfeld, die Expositionsdauer, und/oder ein Kopplungsabstand, können zuvor empirisch bestimmt worden sein, um im Überlappungsbereich bzw. an einer Fügestelle eine notwendige Temperatur zu erreichen. Als Fügestelle kann die Grenzfläche zwischen dem ersten und dem zweiten FKV-Bauteil bezeichnet werden, entlang derer das erste mit dem zweiten FKV-Bauteil verschweißt werden soll oder verschweißt ist.

In einem nächsten Schritt wird das erste FKV-Bauteil mit dem zweiten FKV-Bauteil im Überlappungsbereich verschweißt. Dazu wird das erste FKV-Bauteil auf zumindest die Schmelztemperatur des ersten Kunststoffs des ersten FKV-Bauteils erwärmt und/oder das zweite FKV-Bauteil wird auf zumindest die Schmelztemperatur des zweiten Kunststoffs des zweiten FKV-Bauteils erwärmt. Ein spezifischer elektrischer Widerstand des ersten FKV-Bauteil-Abschnitts und/oder des zweiten FKV-Bauteil-Abschnitts ist in-plane derart angepasst, dass beim Verschweißen in dem ersten FKV-Bauteil-Abschnitt und/oder zweiten FKV-Bauteil-Abschnitt eine vorgegebene Temperaturverteilung erzeugt wird. Die vorgegebene Temperaturverteilung wird vorzugsweise mit konstanten Induktor-Betriebsparametern, d.h. nur durch die Wahl des spezifischen elektrischen Widerstands, erzielt. Die vorgegebene Temperaturverleitung kann beispielsweise dergestalt sein, dass in-plane an zwei verschiedenen Stellen des ersten und/oder zweiten FKV-Bauteils zumindest zwei unterschiedliche Temperaturen vorgesehen sind. Die vorgegebene Temperaturverteilung kann aber auch homogen sein.

Zum Verschweißen wird das erste FKV-Bauteil und/oder das zweite FKV-Bauteil auf eine Schweißtemperatur erwärmt Die Schweißtemperatur ist jene Temperatur an der Fügestelle, bei der die Fügeteile (das erste FKV-Bauteil und das zweite FKV-Bauteil) miteinander verschweißt werden können. Die Schweißtemperatur ist jene materialabhängige Temperatur, bei der die Fügeteile an der Fügestelle in einen viskosen Zustand übergehen und dadurch miteinander stoffschlüssig verbunden werden können. Die polymere Matrix der Fügeteile wird auf die Schweißtemperatur erwärmt, sodass sowohl die amorphen als auch bei teilkristallinen Polymeren die kristallinen Anteile aufschmelzen und eine Polymerschmelze entsteht. Die Viskosität der Polymerschmelze muss ausreichend niedrig sein, damit die Oberflächen der Fügeteile sich insbesondere unter Aufbringen eines Fügedrucks angleichen können und sich eine Grenzfläche bildet. Die Polymerketten können dann über die Grenzfläche diffundieren, wodurch sich die Grenzfläche kontinuierlich auflöst. Die Bewegungsfreiheit der Polymerketten steigt mit Zunahme der Temperatur. Bei teilkristallinen-thermoplastischen Fügeteilen liegt die Schweißtemperatur oberhalb der Schmelztemperatur, vorzugsweise zumindest 20 K, zumindest 35 K, zumindest 50 K, zumindest 70 K oder zumindest 100 K oberhalb der Schmelztemperatur. Bei amorph-thermoplastischen Fügeteilen liegt die Schweißtemperatur oberhalb der Glasübergangstemperatur, beispielsweise zumindest 80 K oder zumindest 90 K oberhalb der Glasübergangstemperatur.

Bei FKV-Bauteilen, die teilkristalline Thermoplaste aufweisen, wird die Fügestelle vorzugsweise auf eine Schweißtemperatur gebracht, die zumindest 20°C über der Schmelztemperatur des ersten Kunststoffs und/oder des zweiten Kunststoffs liegt. Bei FKV-Bauteilen, die amorphe Thermoplaste aufweisen, wird die Fügestelle vorzugsweise auf eine Schweißtemperatur gebracht, die zumindest 80°C über der Glasübergangstemperatur des ersten Kunstoffs des ersten FKV-Bauteils und/oder des zweiten Kunststoffs des zweiten FKV-Bauteils liegt.

Die Schweißtemperatur kann beispielsweise in einem Bereich zwischen 140 °C und 460 °C liegen, wenn das erste FKV-Bauteil und/oder das zweite FKV-Bauteil ein teilkristallines-thermoplastisches Material aufweist. Die Schweißtemperatur kann beispielsweise in einem Bereich zwischen 250 °C und 380 °C liegen, wenn das erste und/oder das zweite FKV-Bauteil ein amorphes-thermoplastisches Material aufweist.

Der Induktor kann relativ zu dem ersten und/oder zweiten FKV-Bauteil, insbesondere relativ zu dem Überlappungsbereich, bewegt werden. Zu diesem Zweck kann das erste und/oder zweite FKV-Bauteil in in-plane Richtung bewegt werden, beispielsweise mit einem Förderband. Alternativ oder zusätzlich kann der Induktor bewegt werden, beispielsweise mithilfe eines Roboters. Auch die relative Geschwindigkeit des Induktors zum Überlappungsbereich kann ein Induktor-Betriebsparameter sein.

Besonders bevorzugt sind das erste und/oder zweite FKV-Bauteil jeweils ein Halbzeug zur Herstellung eines Bauteils für ein Flugzeug, beispielsweise einer Steuerfläche für ein Flugzeug, insbesondere eines Querruders für ein Flugzeug. Das erste und/oder zweite FKV-Bauteil können aber auch generell zur Herstellung eines Bauteils für die Luft- und Raumfahrt eingesetzt werden. Bei dem Bauteil für die Luft- und Raumfahrt kann es sich beispielsweise um ein Bauteil für ein Raumfahrzeug, einen Satelliten, eine Drohne oder ein anderes Flugobjekt handeln. Die FKV-Bauteile können auch zur Herstellung eines Bauteils für die Automobilindustrie, insbesondere eines Bauteils für ein Kraftfahrzeug, eingesetzt werden. Für das Verschweißen können das erste und/oder das zweite FKV-Bauteil auf einer Auflage angeordnet werden. Die Auflage kann beispielsweise durch eine Oberfläche eines Tisches gebildet sein. Der Tisch kann gemäß einer Ausführungsform der Erfindung ein Förderband aufweisen, um die Fügeteile in eine Richtung zu fördern. Die Auflage kann zur besseren Fixierung der Fügeteile an eine Form des ersten und/oder zweiten Fügeteils angepasst sein.

Beispielsweise kann der erste FKV-Bauteil-Abschnitt ein Randabschnitt des ersten FKV-Bauteils sein. Um einen hohen Temperaturgradienten und ein ausgeprägtes Temperaturmaximum am Rand des ersten FKV-Bauteils zu vermeiden, kann der spezifische elektrische Widerstand im Randabschnitt des ersten FKV-Bauteils im Vergleich zum übrigen FKV-Bauteil verringert sein.

Um die stoffschlüssige Verbindung zwischen dem ersten FKV-Bauteil und dem zweiten FKV-Bauteil herzustellen, kann es vorteilhaft sein, wenn nach dem induktiven Erwärmen ein Anpresselement, insbesondere eine Anpressrolle, das erste und das zweite FKV-Bauteil aneinanderpresst. Das Anpresselement kann als Anpressrolle ausgebildet sein, die mit einem einstellbaren Anpressdruck auf das erste und/oder zweite FKV-Bauteil drückt. Der an der Fügestelle resultierende Anpressdruck kann vorzugsweise zwischen 1 bar und 100 bar liegen.

Beispielsweise kann der spezifische elektrische Widerstand des ersten FKV-Bauteils im ersten FKV-Bauteil-Abschnitt zumindest um 5 %, zumindest um 7ö, zumindest um 10 %, zumindest um 15 %, zumindest um 20 %, zumindest um 30 % oder zumindest um 40 % kleiner sein als ein mittlerer spezifischer elektrischer Widerstand des ersten FKV-Bauteils. Der spezifische elektrische Widerstand des zweiten FKV-Bauteils kann im zweiten FKV-Bauteil-Abschnitt zumindest um 5 %, zumindest um 7ö, zumindest um 10 %, zumindest um 15 %, zumindest um 20 %, zumindest um 30 %, oder zumindest um 40 % kleiner sein als ein mittlerer spezifischer elektrischer Widerstand des zweiten FKV-Bauteils.

Die Erfindung betrifft des Weiteren ein FKV-Verbundteil nach Anspruch 12. Erfindungsgemäß ist bei dem FKV-Verbundteil vorgesehen, dass der erste FKV-Bauteil-Abschnitt, einen derartigen spezifischen elektrischen Widerstand aufweist, dass bei einem induktiven Erwärmen des ersten FKV-Bauteils eine vorgegebene Temperaturverteilung erzeugbar ist.

Das FKV-Verbundteil kann insbesondere für ein Flugzeug verwendet werden. Vorzugsweise ist das FKV-Verbundteil herstellbar mit einem erfindungsgemäßen Induktionsschweißverfahren. Das FKV-Verbundteil weist zumindest ein erstes Faser-Kunststoff-Verbund-(FKV)-Bauteil, vorzugsweise herstellbar nach einem erfindungsgemäßen Verfahren, und ein zweites Bauteil, insbesondere ein zweites FKV-Bauteil, auf. Das erste FKV-Bauteil und das zweite Bauteil überlappen in einem Überlappungsbereich miteinander, wobei der Überlappungsbereich einen ersten FKV-Bauteil-Abschnitt des ersten FKV-Bauteils aufweist. Der erste FKV-Bauteil-Abschnitt weist einen derartigen spezifischen elektrischen Widerstand auf, dass bei dem induktiven Erwärmen des ersten FKV-Bauteils (während des induktiven Erwärmens, insbesondere während des Induktionsschweißens) eine vorgegebene Temperaturverteilung erzeugbar ist.

Beispielsweise ist der erste FKV-Bauteil-Abschnitt ein Randabschnitt des ersten FKV-Bauteils. Der spezifische elektrische Widerstand des Randabschnitt des ersten FKV-Bauteils ist niedriger als der spezifische elektrische Widerstand des übrigen ersten FKV-Bauteils, sodass während des Induktionsschweißens ein hoher Temperaturgradient und ein ausgeprägtes Temperaturmaximum am Rand des ersten FKV-Bauteils verringert oder verhindert wurde. Das Integrität des FKV-Verbundteils ist somit nicht durch unerwünschte Temperaturen während des Induktionsschweißens beeinträchtigt.

Im Folgenden wird die Erfindung anhand von Zeichnungen näher beschrieben, auf die sie jedoch nicht beschränkt sein soll.
Fig. 1A-D zeigen zur Illustration des Randeffekts eine schematische Darstellung eines Laminats, das mittels eines Induktors erwärmt wird.
Fig. 2A-C zeigen ein FKV-Bauteil mit unidirektionalen Bandhalbzeugen und verschiedenen Ausführungsformen von weiteren elektrisch leitfähigen Fasern;
Fig. 3A zeigt einen FKV-Vorformling, der mittels eines Werkzeugs mit einem Konsolidierungsdruck gepresst wird
Fig. 3B zeigt einen FKV-Vorformling, der mittels eines Werkzeugs mit einem Konsolidierungsdruck gepresst wird
Fig. 4 zeigt einen FKV-Vorformling, der mittels einer Konsolidierungsrolle mit einem Konsolidierungsdruck gepresst wird
Fig. 5A und 5B zeigen eine schematische Darstellung eines Zwischenschritts eines Induktionsschweißverfahrens mit einem ersten FKV-Bauteil und einem zweiten FKV-Bauteil, die in einem Überlappungsbereich überlappen

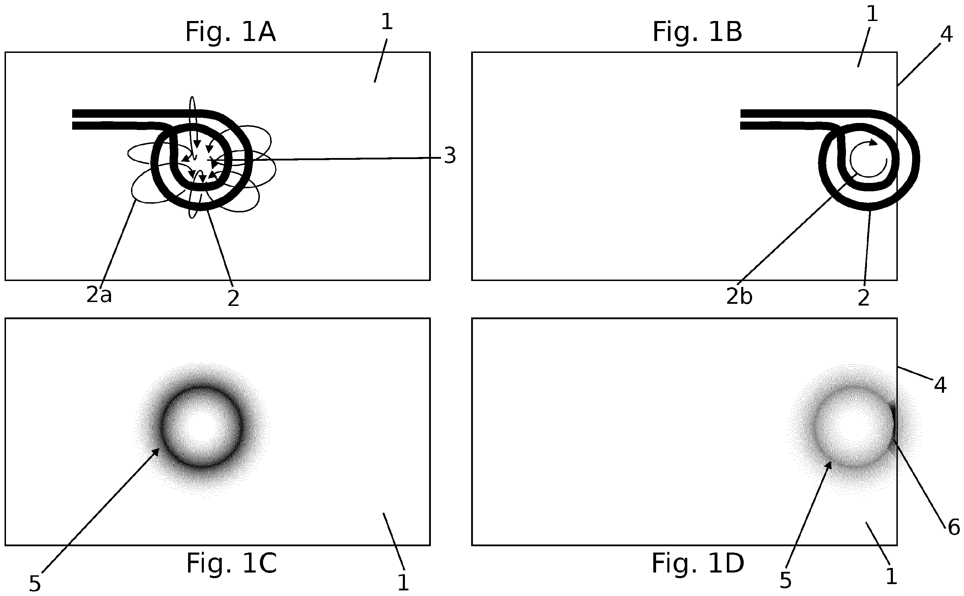

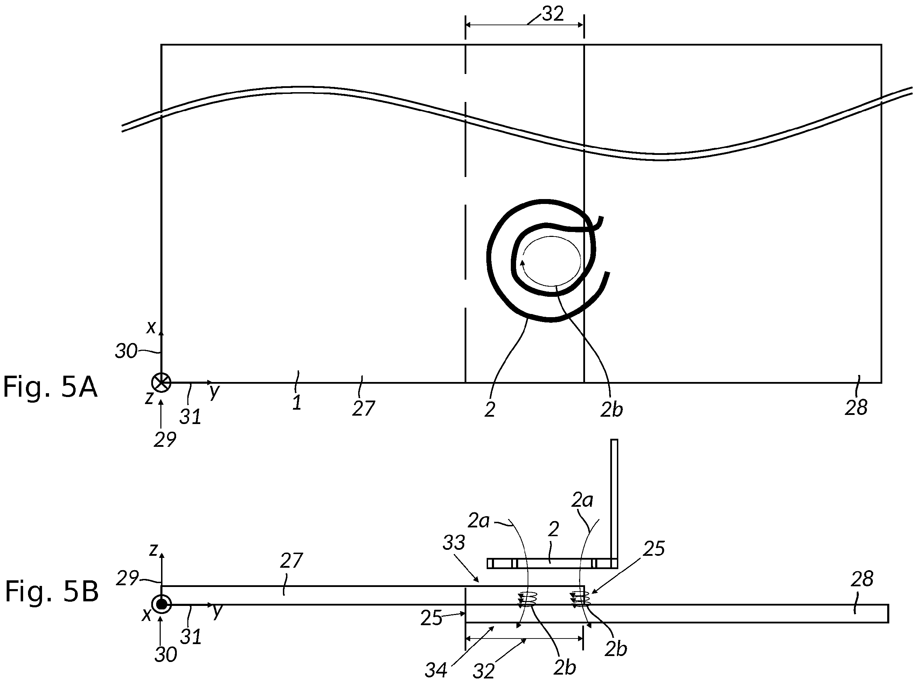

Fig. 1A-D zeigen eine Illustration des Randeffekts beim induktiven Erwärmen eines flachen, d.h. ungewölbten, Laminats 1 aus Faser-Kunststoff-Verbund-Material. Es ist jeweils eine Draufsicht auf das Laminat 1 zu sehen. Oberhalb des Laminats 1 ist in den Figuren 1A und 1B schematisch ein Induktor 2, hier in Form einer Spule, angeordnet. Der Induktor 2 wird mit Wechselstrom betrieben, um ein elektro-magnetisches Wechselfeld 2a (siehe Fig. 1A und Fig. 5B) zu erzeugen, das Wirbelströme 2b (siehe Fig. 1B oder Fig. 5A) in dem Laminat 1 induziert. Im Laminat 1 sind elektrisch leitfähige Fasern (nicht dargestellt) enthalten, durch die Energie des elektro-magnetischen Wechselfeldes 2a dissipiert wird. Folglich kommt es zu einer Erwärmung des Laminat 1 in einem Bereich des Laminats 1 unterhalb des Induktors 2.

Fig. 1a zeigt ein Laminat 1 in einer Draufsicht, wobei der Induktor 2 im Wesentlichen über einer Mitte 3 des Laminats 1 angeordnet ist. Im Vergleich dazu ragt der Induktor 1 in Fig. 1B über einen Rand 4 des Laminats 1 hinaus.

Fig. 1C zeigt schematisch eine Temperaturverteilung 5, die aus der induktiven Erwärmung gemäß Fig. 1A resultiert. Die Temperaturverteilung 5 entspricht im Wesentlichen einem Spiegelbild des Induktors 2. Im Vergleich zeigt Fig. 1D eine Temperaturverteilung 5, die aus der Anordnung des Induktors 2 gemäß Fig. 1B resultiert. Erkennbar ist in Fig. 1D, dass die Temperatur am Rand 4 des Laminats 1 erhöht ist. Die induzierten Wirbelströme 2b im FKV-Element können der Form des Induktors 2 über den Rand 4 des Laminat 1 hinaus nämlich nicht folgen. Folglich kommt es zu einer vergleichsweise erhöhten Wirbelstromdichte in einem Teil des Rands 4 unter dem Induktor 2. Aufgrund der lokal erhöhten Wirbelstromdichte wird lokal mehr Energie dissipiert, wodurch ein ausgeprägtes Temperaturmaximum 6 am Rand 4 des Laminats 1 auftritt. Der effektive Gesamtwiderstand der Leiterschleife, die für die Induktion im Laminat 1 relevant ist, ist in diesem Fall jedoch erhöht, wodurch sich die induzierte Gesamtleistung reduziert, sodass dies negative Auswirkungen auf ein Induktionsschweißverfahren haben kann. Insgesamt wird in Fig. 1D daher weniger Energie dissipiert als in Bereichen des Laminats 1 ohne Rand 4 (wie beispielsweise in Fig. 1A), wodurch eine durchschnittliche Temperatur der Temperaturverteilung von Fig. 1D niedriger ist als eine durchschnittliche Temperatur der Temperaturverteilung in Fig. 1C.

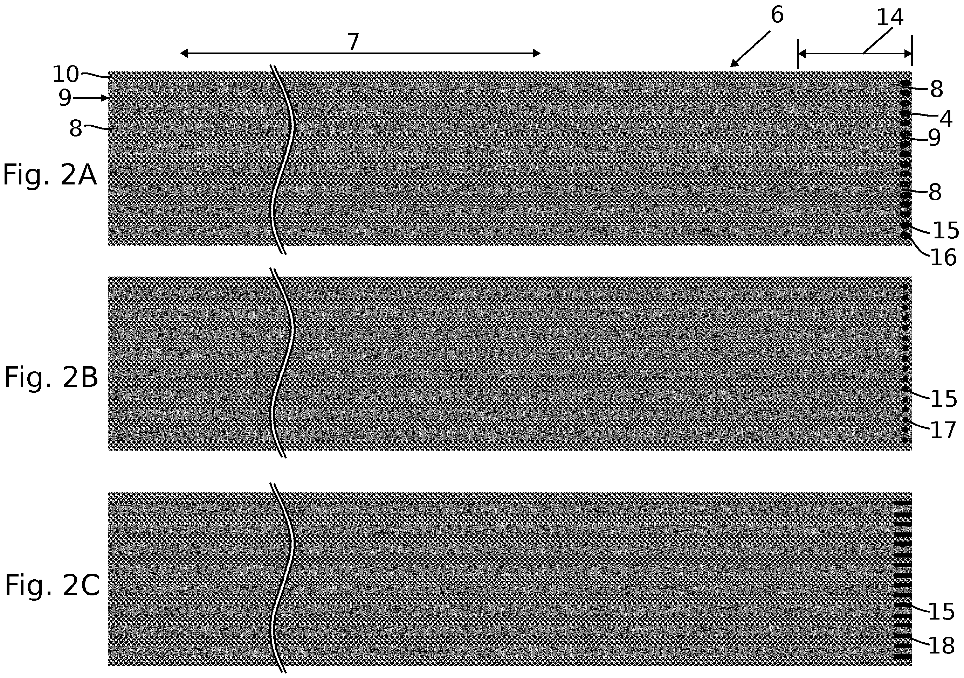

Fig. 2A zeigt ein FKV-Bauteil 6 mit acht flächigen unidirektionalen Bandhalbzeugen 8 im Querschnitt, in denen elektrisch leitfähige Fasern (nicht dargestellt) angeordnet sind. Das FKV-Bauteil 6 ist normal auf eine Haupterstreckungsebene 7 des FKV-Bauteils 6 dargestellt. Folglich ist in Fig. 2A ein Schichtaufbau zu sehen. Die unidirektionalen Bandhalbzeuge 8 sind jeweils parallel zueinander und voneinander beabstandet. Die elektrisch leitfähigen Fasern liegen innerhalb der unidirektionalen Bandhalbzeuge 8 überwiegend geordnet vor. Eine Hauptachse der einzelnen Fasern verläuft parallel zu einer Haupterstreckungsebene des FKV-Bauteils 6.

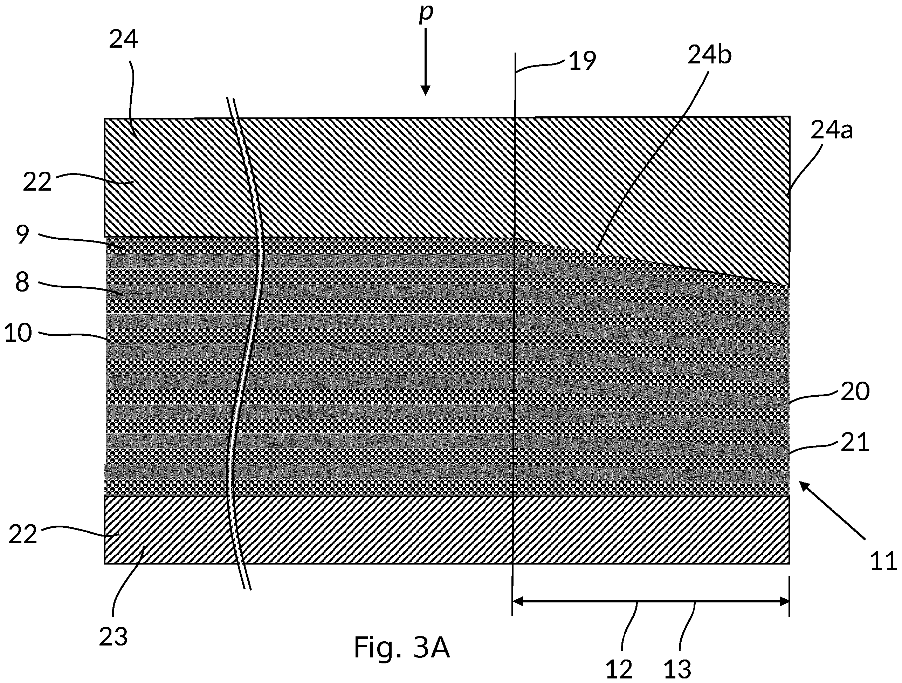

Um das FKV-Bauteil 6 herzustellen, wurden die folgenden Schritten durchgeführt:
- Erzeugen eines FKV-Vorformlings 11 (siehe beispielsweise Fig. 3A) aufweisend eine Matrix 9 mit einem Kunststoff 10, in diesem Beispiel ein Thermoplast, und darin enthaltenen elektrisch leitfähigen Fasern, in diesem Ausführungsbeispiel elektrisch leitfähigen Kohlenstofffasern; und
- Konsolidieren des FKV-Vorformlings 11, um das FKV-Bauteil 6 zu erhalten.

Das Erzeugen des FKV-Vorformlings 11 wurde in dieser beispielhaften Ausführungsform durch die folgenden beiden Schritte ausgeführt:
- Vorsehen der elektrisch leitfähigen Fasern, in diesem Ausführungsbeispiel elektrisch leitfähige Kohlenstofffasern;
- Einbetten der elektrisch leitfähigen Fasern in die Matrix 9 aufweisend einen Kunststoff 10, in diesem Fall einen Thermoplasten, um den FKV-Vorformling 11 zu erhalten;

Der FKV-Vorformling 11 hat einen FKV-Vorformling-Bereich 12 aufgewiesen, in diesem Beispiel einen FKV-Vorformling-Randbereich 13 (vgl. Fig. 3a), dessen spezifischer elektrischer Widerstand während des Erzeugens des FKV-Vorformlings 11 in-plane derart angepasst wurde, dass bei einem Erwärmen des erhaltenen FKV-Bauteils 6 mithilfe induktiver Energiezufuhr, in diesem Beispiel mittels eines Induktionsschweißverfahrens, in einem FKV-Bauteil-Abschnitt 14, der dem FKV-Vorformling-Bereich 12 entspricht, eine vorgegebene Temperaturverteilung erzeugbar ist. Des Weiteren wurde der weitere Schritt durchgeführt:
- Vorsehen von weiteren elektrisch leitfähigen Fasern 15, in diesem Beispiel metallischen Fasern, welche eine höhere elektrische Leitfähigkeit besitzen als die elektrisch leitfähigen Fasern, wobei die weiteren elektrisch leitfähigen Fasern 15 während des Erzeugens des FKV-Vorformlings 11 im FKV-Vorformling-Bereich 12 des FKV-Vorformlings 11 in die Matrix 9 eingebettet wurden, sodass der FKV-Bauteil-Abschnitt 14 des nach dem Konsolidieren erhaltenen FKV-Bauteils 6 die weiteren elektrisch leitfähigen Fasern 15 aufweist. Die weiteren elektrisch leitfähigen Fasern 15 verbinden die unidirektionalen Bandhalbzeuge 8 im FKV-Vorformling-Bereich 12 elektrisch, wodurch der effektive Widerstand von für die induktive Energiezufuhr relevanten Leiterschleifen sinkt bzw. der spezifische elektrische Widerstand sinkt.

In Fig. 2A sind die weiteren elektrisch leitfähigen Fasern 15 in Form von kontinuierlichen metallischen Rovings 16 vorgesehen. Die metallischen Rovings 16 sind Bündel aus weiteren metallischen elektrisch leitfähigen Fasern 15. Die metallischen Rovings 16 wurden gemeinsam mit den unidirektionalen Bandhalbzeugen 8 angeordnet. Die einzelnen unidirektionalen Bandhalbzeige 8 sind durch die Rovings 16 elektrisch miteinander verbunden. Die leitfähigen Fasern der unidirektionalen Bandhalbzeuge 8 sind gemeinsam mit den Rovings 16 in die Matrix 9 eingebettet.

In Fig. 2B werden die weiteren elektrisch leitfähigen Fasern 15 durch metallische Drähte 17 gebildet. Die metallischen Drähte 17 wurden gemeinsam mit den unidirektionalen Bandhalbzeugen 8 angeordnet. Die metallischen Drähte 17 wurden in diesem Beispiel aus einem einzigen kontinuierlichen Draht erzeugt. Die einzelnen unidirektionalen Bandhalbzeige 8 sind durch die Drähte 17 elektrisch miteinander verbunden. Die leitfähigen Fasern der unidirektionalen Bandhalbzeuge 8 sind gemeinsam mit den metallischen Drähten 17 in die Matrix 9 eingebettet.

In Fig. 2C liegen die weiteren elektrisch leitfähigen Fasern 15 in Form von kontinuierlichen Bändern mit metallischer Gitterstruktur 18 vor. Die Bänder mit metallischer Gitterstruktur 18 wurden gemeinsam mit den unidirektionalen Bandhalbzeugen 8 vorgesehen. Die einzelnen unidirektionalen Bandhalbzeige 8 sind durch die Bänder mit metallischer Gitterstruktur 18 elektrisch miteinander verbunden. Die leitfähigen Fasern der unidirektionalen Bandhalbzeuge 8 sind gemeinsam mit den Bändern mit metallischer Gitterstruktur 18 in die Matrix 9 eingebettet.

Im Vergleich zu der Illustration in Figur 1D kann mittels der weiteren elektrisch leitfähigen Fasern 15 ein Temperaturmaximum 6 am Rand 4 des FKV-Bauteils 6 aufgrund des Randeffekts beim induktiven Erwärmen des FKV-Bauteils 6 verhindert werden.

Fig. 3A zeigt einen FKV-Vorformling 11 im Querschnitt. Im Vergleich zu dem FKV-Bauteil 6 aus den Figuren 2A-C sind in diesem Ausführungsbeispiel keine weiteren elektrisch leitfähigen Fasern 15 vorgesehen. Um ein FKV-Bauteil 6 aus dem FKV-Vorformling 11 zu erhalten, wird der FKV-Vorformling 11, wie oben bereits erwähnt, konsolidiert. Fig. 3A zeigt den FKV-Vorformling 11 während des Konsolidierens und mit einem zusätzlichen Schritt:
- Pressen des FKV-Vorformlings 11 mit einem Konsolidierungsdruck p (während des Konsolidierens) wobei im FKV-Vorformling-Randbereich 13 ein Konsolidierungsdruck p anliegt, der höher ist als der Konsolidierungsdruck p im übrigen Bereich des FKV-Vorformlings 11, wobei beim Pressen des FKV-Vorformlings 11 Kunststoff (10) aus dem FKV-Vorformling-Randbereich 13 verdrängt wird. Dabei kann Kunststoff aus dem FKV-Vorformling 11 austreten. Der Konsolidierungsdruck p ist im FKV-Vorformling-Bereich 12 ortsabhängig und steigt von einem inneren, einer Mitte des FKV-Vorformlings zugewandten Ende 19 eines Außenabschnitts zu einem äußerem, dem inneren Ende gegenüberliegenden Ende des Au-ßenabschnitts hin an, wobei das äußere Ende 20 des Außenabschnitts ein äußeres Ende des FKV-Vorformlings 21 ist.

Zusätzlich wird der FKV-Vorformling 11 während des Konsolidierens auf oder über die Schmelztemperatur des Kunststoffs 10 erwärmt, wobei optional der FKV-Vorformling 11 im FKV-Vorformling-Bereich 12 auf eine Temperatur erwärmt werden kann, die höher ist als die Temperatur im übrigen Bereich des FKV-Vorformlings 11.

Um den FKV-Vorformling 11 entsprechend zu pressen und zu erwärmen, ist ein Werkzeug 22 vorgesehen, das ein Werkzeug-Unterteil 23 und ein Werkzeug-Oberteil 24 aufweist. In der gezeigten Darstellung besitzt das Werkzeug-Oberteil 24 an der dem Werkzeug-Unterteil 23 zugewandten Seite eine in Richtung eines Außenrandes 24a des Werkzeug-Oberteils 24 ansteigende und somit geneigte Anpressfläche 24b. Die ansteigende Anpressfläche 24b wird durch eine in Richtung des Außenrandes 24a des Werkzeug-Oberteils 24 zunehmende Verdickung des Werkzeug-Oberteils 24 gebildet. Durch die Form des Werkzeugs 22 kann der Konsolidierungsdruck p in-plane angepasst werden und entsprechend in-plane variieren, insbesondere in Richtung eines äußeren Endes 21 des FKV-Vorformlings 11 zunehmen. Wenn das Werkzeug-Oberteil 24 seine finale Position relativ zum Werkzeug-Unterteil 23 erreicht hat, ist der finale Konsolidierungsdruck im Wesentlichen konstant.

Durch den (initial) erhöhten Konsolidierungsdruck p und vorzugsweise eine erhöhte Temperatur im FKV-Vorformling-Randbereich 13 wird ein Fasern-Volumen-Gehalt (FVG) im FKV-Vorformling-Randbereich 13 im Vergleich zum übrigen FKV-Vorformling 11 erhöht. Dadurch ist der spezifische elektrische Widerstand im FKV-Vorformling-Randbereich 13 im Vergleich zum übrigen FKV-Vorformling 11 und folglich der spezifische elektrische Widerstand in einem Randabschnitt 25 (siehe Fig. 5B) des nach dem Konsolidieren erhaltenen FKV-Bauteils 6 im Vergleich zum übrigen FKV-Bauteil 6 verringert.

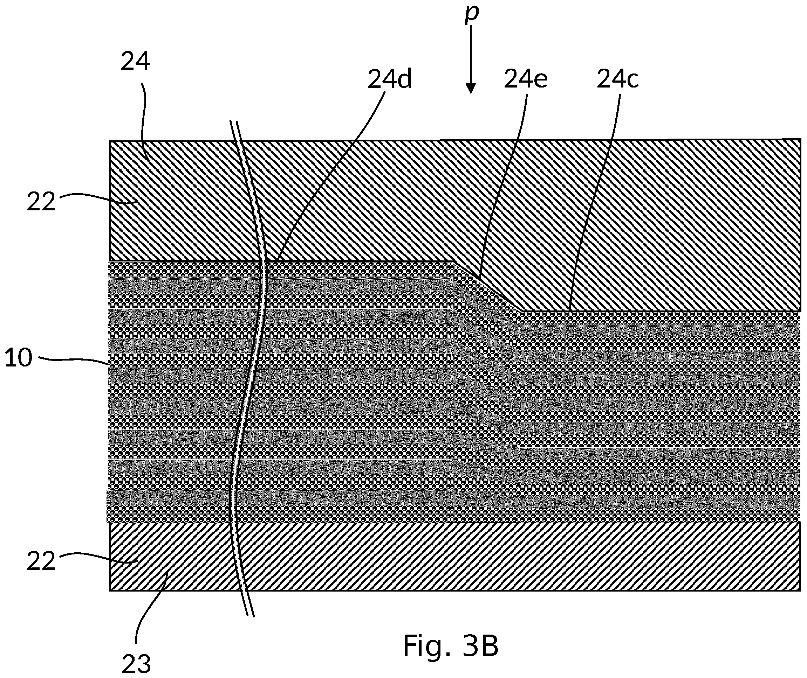

Fig. 3B zeigt im Vergleich zu Fig. 3A ein anderes Profil des (initialen) Konsolidierungsdrucks p, das durch eine andere Form des Werkzeugs 22 erreicht wird. Bei dem Werkzeug 22 gemäß Fig. 3B weist das Werkzeug Oberteil 24 eine herabgesetzte Anpressfläche 24c auf, die im Wesentlichen parallel zur Anpressfläche 24d des übrigen Werkzeug Oberteils 24 verläuft. Zur Vermeidung von Bruchstellen kann zwischen der herabgesetzten Anpressfläche 24c und der übrigen Anpressfläche 24d ein geneigter Übergangsbereich 24e vorgesehen sein. Im Vergleich zum Konsolidierungsdruck p in Fig. 3a ist der Konsolidierungsdruck p in Fig. 3b im FKV-Vorformling-Randbereich 13 teilweise konstant. Der Konsolidierungsdruck p ist im FKV-Vorformling-Randbereich 13 im Vergleich zum übrigen FKV-Vorformling 11 erhöht.

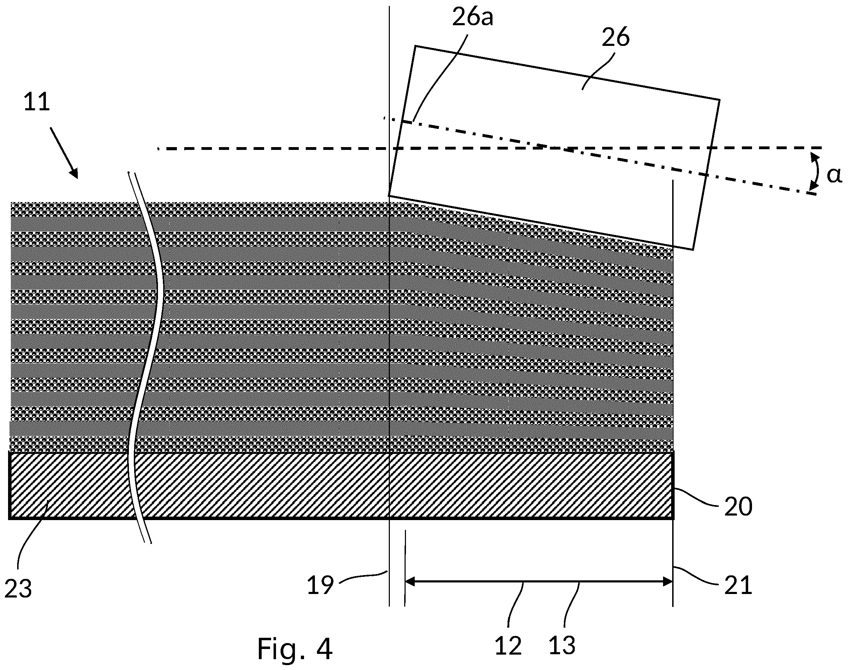

Fig. 4 zeigt einen weiteren FKV-Vorformling 11. Im Vergleich zu den Ausführungsbeispielen aus Figuren 3A und 3B erfolgt in diesem Fall die Konsolidierung des FKV-Vorformlings 11 zum FKV-Bauteil 6 sukzessive bzw. kontinuierlich und schichtweise. Anstatt des Werkzeugs 22 wird eine Konsolidierungsrolle 26 verwendet. Um einen zum äußeren Ende 21 ansteigenden FVG zu erzeugen, ist die Drehachse 26a der Konsolidierungsrolle 26 relativ zu einer in-plane Ebene um einen Winkel α, der beispielsweise zumindest 20° betragen kann, geneigt. Durch die Neigung der Konsolidierungsrolle 26 kann ein zum Rand 4 ansteigender (transienter) Konsolidierungsdruck und folglich ein zum Rand 4 hin ansteigender FVG erzeugt werden. In diesem Ausführungsbeispiel wird kann ebenfalls ein gezieltes Erwärmen des FKV-Vorformlings 11 während des Konsolidierens erfolgen, um eine Reduktion des Kunststoffs, d.h. des Kunstoffanteils, lokal zu forcieren.

Die Figuren 5A und 5B zeigen einen Zwischenschritt eines Induktionsschweißverfahrens zum Fügen von Faser-Kunststoff-Verbund-(FKV)-Bauteilen 6, insbesondere FKV-Bauteilen 6 für ein Flugzeug. Fig. 5A zeigt eine Draufsicht auf einen Induktor 2, der über einem ersten FKV-Bauteil 27 und einem zweiten FKV-Bauteil 28 angeordnet ist. Fig. 5B zeigt eine seitliche Ansicht der Anordnung von Fig. 5A. Das erste FKV-Bauteil 27 und das zweite FKV-Bauteil 28 weisen jeweils eine Dicke in z-Richtung 29 auf. Out-of-plane liegt in Fig. 5A und Fig. 5B somit in z-Richtung 29. Eine Haupterstreckungsebene des ersten FKV-Bauteils 27 und eine Haupterstreckungsebene des zweiten FKV-Bauteils 28 liegen jeweils in einer x-y-Ebene (aufgespannt durch die x-Richtung 30 und die y-Richtung 31). Die x-Richtung 30 und die y-Richtung 31 liegen jeweils in-plane. Sowohl elektrisch leitfähige Fasern des ersten FKV-Bauteils 27 als auch elektrisch leitfähige Fasern des zweiten FKV-Bauteils 28 sind entsprechend in der x-y-Ebene ausgerichtet. Jeder Vektor, der in der x-y-Ebene verläuft (also keine z-Komponente aufweist), liegt in diesem Ausführungsbeispiel in-plane, sowohl in Bezug auf das erste FKV-Bauteil 27 als auch in Bezug auf das zweite FKV-Bauteil 28.

Der Induktor 2, in diesem Fall eine Spule, ist beabstandet von einem Überlappungsbereich 32 des ersten FKV-Bauteils 27 und des zweiten FKV-Bauteils 28 angeordnet.

Das Induktionsschweißverfahren weist die folgenden Schritte auf:
- Anordnen des ersten FKV-Bauteils 27 und des zweiten FKV-Bauteils 28, wobei das erste FKV-Bauteil 27 in einem ersten FKV-Bauteil-Abschnitt 33 mit dem zweiten FKV-Bauteil 28 in einem zweiten FKV-Bauteil-Abschnitt 34 überlappt und dadurch der Überlappungsbereich 32 definiert wird;
- Induktives Erwärmen des ersten FKV-Bauteils 27 und/oder des zweiten FKV-Bauteils 28 in dem Überlappungsbereich 32 mithilfe eines elektromagnetischen Feldes, in diesem Beispiel mithilfe des elektromagnetischen Feldes des Induktors 2; und
- Verschweißen des ersten FKV-Bauteils 27 mit dem zweiten FKV-Bauteil 28 im Überlappungsbereich 32. Ein spezifischer elektrischer Widerstand des ersten FKV-Bauteil-Abschnitts 33 und des zweiten FKV-Bauteil-Abschnitts 34 ist in-plane derart angepasst, dass beim Verschweißen in dem ersten FKV-Bauteil-Abschnitt 33 und zweiten FKV-Bauteil-Abschnitt 34 eine vorgegebene Temperaturverteilung 5 (vgl. Fig. 1C) erzeugt wird. Die Temperaturverteilung 5 gibt in diesem Beispiel die Temperatur des ersten FKV-Bauteils 27 als Funktion der Koordinaten x und y an.

Der erste FKV-Bauteil-Abschnitt 33 ist ein Randabschnitt 25 des ersten FKV-Bauteils 27. Der zweite FKV-Bauteil-Abschnitt 34 ist ein Randabschnitt 25 des zweiten FKV-Bauteils 34.

Der spezifische elektrische Widerstand des ersten FKV-Bauteils im ersten FKV-Bauteil-Abschnitt 33 ist zumindest 10 % kleiner als ein mittlerer spezifischer elektrischer Widerstand des ersten FKV-Bauteils 27.

Mittels des Induktionsschweißverfahrens kann ein FKV-Verbundteil (nicht dargestellt) hergestellt werden. Das FKV-Verbundteil weist das erste Faser-Kunststoff-Verbund-(FKV)-Bauteil 27 und ein zweites Bauteil, in diesem Beispiel das zweite FKV-Bauteil 28, auf. Das erste FKV-Bauteil 27 und das zweite FKV-Bauteil 28 sind in dem Überlappungsbereich 32 miteinander überlappend verbunden, wobei der Überlappungsbereich 32 den ersten FKV-Bauteil-Abschnitt 33 des ersten FKV-Bauteils 27 aufweist. Der erste FKV-Bauteil-Abschnitt 33 weist einen derartigen spezifischen elektrischen Widerstand auf, dass bei dem induktiven Erwärmen des ersten FKV-Bauteils 27 eine vorgegebene Temperaturverteilung 5 erzeugbar ist. Der erste FKV-Bauteil-Abschnitt 33 ist ein Randabschnitt 25 des ersten FKV-Bauteils 27.

## Patentansprüche

1. Verfahren zur Herstellung eines Faser-Kunststoff-Verbund-(FKV)-Bauteils (6) mit zumindest den folgenden Schritten:
- Erzeugen eines FKV-Vorformlings (11) aufweisend eine Matrix (9) mit einem Kunststoff (10), vorzugsweise einen Thermoplasten, und darin enthaltenen elektrisch leitfähigen Fasern, insbesondere elektrisch leitfähigen Kohlenstofffasern; und
- Konsolidieren des FKV-Vorformlings (11), um ein FKV-Bauteil (7) zu erhalten;
**dadurch gekennzeichnet, dass**
der FKV-Vorformling (11) einen FKV-Vorformling-Bereich (12), insbesondere ein FKV-Vorformling-Randbereich (13), aufweist, dessen spezifischer elektrischer Widerstand während oder nach dem Erzeugen des FKV-Vorformlings (11) in-plane derart angepasst wird, dass bei einem Erwärmen des FKV-Bauteils (6) mithilfe induktiver Energiezufuhr, beispielsweise mittels eines Induktionsschweißverfahrens, in einem FKV-Bauteil-Abschnitt (14), der dem FKV-Vorformling-Bereich (12) entspricht, eine vorgegebene Temperaturverteilung (5) erzeugbar ist.

2. Verfahren nach Anspruch 1, **dadurch gekennzeichnet, dass** die elektrisch leitfähigen Fasern in unidirektionalen Bandhalbzeugen (8), insbesondere in UD-Schichten, angeordnet sind.

3. Verfahren nach Anspruch 1, **dadurch gekennzeichnet, dass** die elektrisch leitfähigen Fasern als Rovings, Gelege, Vließmatten oder Gewebe, angeordnet sind.

4. Verfahren nach einem der vorhergehenden Ansprüche, **gekennzeichnet durch** den weiteren Schritt:
- Vorsehen von weiteren elektrisch leitfähigen Fasern (15), insbesondere metallischen Fasern, welche vorzugsweise eine höhere elektrische Leitfähigkeit besitzen als die elektrisch leitfähigen Fasern;
wobei die weiteren elektrisch leitfähigen Fasern (15) während des Erzeugens des FKV-Vorformlings im FKV-Vorformling-Bereich (12) des FKV-Vorformlings (11) in die Matrix (9) eingebettet werden, sodass der FKV-Bauteil-Abschnitt (14) des nach dem Konsolidieren erhaltenen FKV-Bauteils (6) die weiteren elektrisch leitfähigen Fasern (15) aufweist.

5. Verfahren nach Ansprüchen 2 und 4, **dadurch gekennzeichnet, dass** die weiteren elektrisch leitfähigen Fasern (15) die unidirektionalen Bandhalbzeuge (15) im FKV-Vorformling-Bereich (12) elektrisch verbinden.

6. Verfahren nach einem der Ansprüche 1 bis 5, **gekennzeichnet durch** den weiteren Schritt:
- Pressen des FKV-Vorformlings (11) mit einem Konsolidierungsdruck, insbesondere während des Konsolidierens, wobei im FKV-Vorformling-Randbereich (13) ein Konsolidierungsdruck anliegt, der höher ist als der Konsolidierungsdruck im übrigen Bereich des FKV-Vorformlings (11), wobei beim Pressen des FKV-Vorformlings (11) Kunststoff (10) aus dem FKV-Vorformling-Randbereich (13) verdrängt wird.

7. Verfahren nach Anspruch 6, **dadurch gekennzeichnet, dass** der Konsolidierungsdruck in den FKV-Vorformling-Bereich (13) ortsabhängig ist und von einem inneren, einer Mitte des FKV-Vorformlings zugewandten Ende eines Außenabschnitts zu einem äußerem, dem inneren Ende gegenüberliegenden Ende des Außenabschnitts hin ansteigt, wobei das äußere Ende des Außenabschnitts (20) ein äu-ßeres Ende (21) des FKV-Vorformlings (11) ist.

8. Verfahren nach einem der Ansprüche 1 bis 7, **dadurch gekennzeichnet, dass** der FKV-Vorformling (11) während des Konsolidierens insbesondere auf mindestens die Schmelztemperatur des Kunststoffs erwärmt wird, wobei der FKV-Vorformling (11) im FKV-Vorformling-Bereich (12) auf eine Temperatur erwärmt wird, die höher ist als die Temperatur im übrigen Bereich des FKV-Vorformlings (11).

9. Verfahren nach einem der Ansprüche 1 bis 8, **dadurch gekennzeichnet, dass** der spezifische elektrische Widerstand des FKV-Bauteils (6) im FKV-Bauteil-Abschnitt (14) zumindest 10 % kleiner ist als ein mittlerer spezifischer elektrischer Widerstand des FKV-Bauteils (6).

10. Induktionsschweißverfahren zum Fügen von Faser-Kunststoff-Verbund-(FKV)-Bauteilen (6), insbesondere FKV-Bauteilen (6) für ein Flugzeug, mit den folgenden Schritten:
- Anordnen eines ersten FKV-Bauteils (27) und eines zweiten FKV-Bauteils (28), wobei das erste FKV-Bauteil (27) in einem ersten FKV-Bauteil-Abschnitt (33) mit dem zweiten FKV-Bauteil (28) in einem zweiten FKV-Bauteil-Abschnitt (34) überlappt und dadurch ein Überlappungsbereich (32) definiert wird;
- Induktives Erwärmen des ersten FKV-Bauteils (27) und/oder des zweiten FKV-Bauteils (28) in dem Überlappungsbereich (32) mithilfe eines elektromagnetischen Feldes, insbesondere mithilfe des elektromagnetischen Feldes eines Induktors (2); und
- Verschweißen des ersten FKV-Bauteils (27) mit dem zweiten FKV-Bauteil (28) im Überlappungsbereich (32);
**dadurch gekennzeichnet, dass**
ein spezifischer elektrischer Widerstand des ersten FKV-Bauteil-Abschnitts (33) und/oder zweiten FKV-Bauteil-Abschnitts (34) in-plane derart angepasst ist, dass beim Verschweißen in dem ersten FKV-Bauteil-Abschnitt (33) und/oder zweiten FKV-Bauteil-Abschnitt (34) eine vorgegebene Temperaturverteilung (5) erzeugt wird.

11. Induktionsschweißverfahren nach Anspruch 10, **dadurch gekennzeichnet, dass** der erste FKV-Bauteil-Abschnitt (33) ein Randabschnitt (25) des ersten FKV-Bauteils (27) ist.

12. FKV-Verbundteil, insbesondere Verbundteil für ein Flugzeug, vorzugsweise herstellbar mit einem Verfahren nach einem der Ansprüche 9 bis 11, aufweisend zumindest ein erstes Faser-Kunststoff-Verbund-(FKV)-Bauteil (27), vorzugsweise herstellbar mit einem Verfahren nach einem der Ansprüche 1 bis 8, und ein zweites Bauteil, insbesondere ein zweites FKV-Bauteil (28), wobei das erste FKV-Bauteil (27) und das zweite Bauteil (28) in einem Überlappungsbereich (32) miteinander überlappend verbunden sind, wobei der Überlappungsbereich (32) einen ersten FKV-Bauteil-Abschnitt (33) des ersten FKV-Bauteils (27) aufweist,
**dadurch gekennzeichnet, dass**
der erste FKV-Bauteil-Abschnitt (33), einen derartigen spezifischen elektrischen Widerstand aufweist, dass bei einem induktiven Erwärmen des ersten FKV-Bauteils (27) eine vorgegebene Temperaturverteilung (5) erzeugbar ist.

13. FKV-Verbundteil nach Anspruch 11, **dadurch gekennzeichnet, dass** der erste FKV-Bauteil-Abschnitt (33) ein Randabschnitt (25) des ersten FKV-Bauteils (27) ist.
